# EUROPÄISCHE PATENTSCHRIFT

(11) **EP 2 671 102 B1**
(45) Veröffentlichungstag und Bekanntmachung des Hinweises auf die Patenterteilung: **28.09.2022**
(21) Anmeldenummer: 12703967.5
(22) Anmeldetag: 02.02.2012
(51) Int. Cl.: G01V 3/10

(54) **METALLDETEKTOR ZUR ORTUNG METALLISCHER OBJEKTE**
METAL DETECTOR FOR LOCATING METAL OBJECTS
DÉTECTEUR DE MÉTAUX POUR LA LOCALISATION D'OBJETS MÉTALLIQUES

(30) Priorität: 02.02.2011 DE 102011010144
(43) Veröffentlichungstag der Anmeldung: 11.12.2013
(73) Patentinhaber: Zircon Corporation, Campbell, CA 95008 (US)
(72) Erfinder: Reime, Gerd, 77815 Bühl (DE)
(74) Vertreter: Reinhardt, Harry
(86) Internationale Anmeldenummer: PCT/EP2012/000457
(87) Internationale Veröffentlichungsnummer: WO 2012/104086

(56) Entgegenhaltungen:
- WO-A1-2007/012502
- DE-A1-102009 009 061
- DE-A1-102009 021 804
- DE-A1-102009 029 928
- US-A- 4 325 027
- US-A- 4 486 713
- US-A- 5 729 143
- US-B1- 6 583 625

## Beschreibung

Die Erfindung betrifft einen Metalldetektor zur Ortung metallischer Objekte.

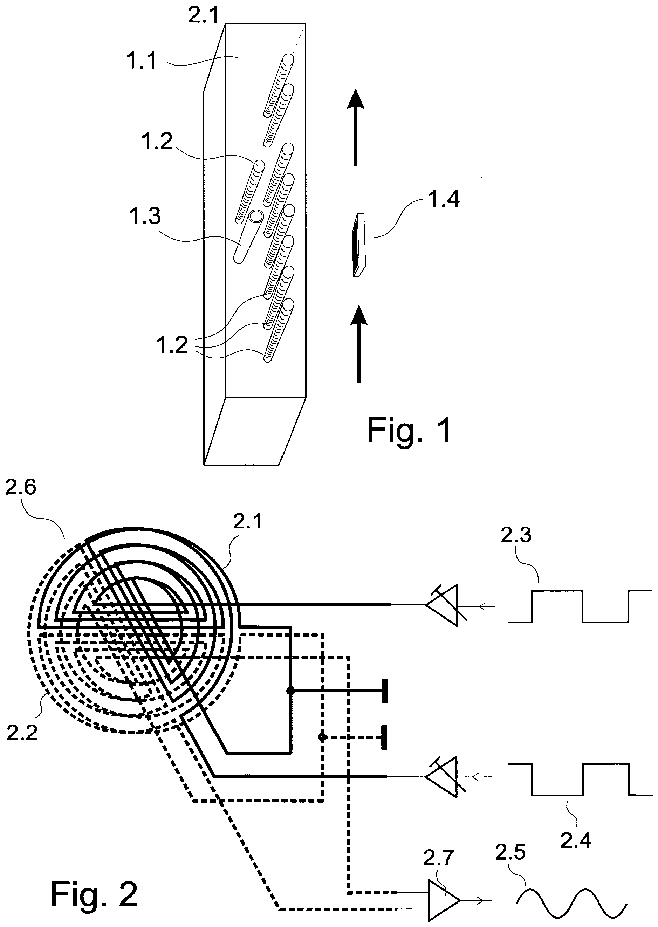

Der Vorteil der hier erläuterten Erfindung liegt in einer gezielten Ausblendung von ungewünschten metallischen Gegenständen im Messbereich und gleichzeitiger Detektion gewünschter metallischer Gegenstände. Als Beispiel ist in Fig. 1 die Detektion einer relativ dünnen metallischen Rohrleitung in einer Wand hinter einer Anzahl von Moniereisen, Bewehrungsstäben oder Baustahlmatten (auch Baustahl benannt) gezeigt. Fig. 1 zeigt ein als Mauerstück ausgestaltetes Objekt 1.1 mit eingebetteten Moniereisen 1.2. Hinter den Moniereisen 1.2 befindet sich eine zu detektierende metallische Rohrleitung 1.3. Ein Metalldetektor 1.4 wird am Objekt 1.1 vorbeigeführt.

Metalldetektoren im Stand der Technik würden zwar die Moniereisen eindeutig detektieren, die Rohrleitung hinter den Moniereisen wird in der Regel jedoch nicht gesehen. Es kann zwar zu einer Messwerterhöhung im Bereich der Rohrleitung kommen, aus der man unter Umständen eine Detektion einer Rohrleitung schließen könnte, eine ähnliche Messwerterhöhung erfolgt jedoch auch, wenn sich an Stelle der Rohrleitung ein weiteres Moniereisen befindet oder wenn sich an einer Stelle die Moniereisen näher aneinander befinden. Eine zuverlässige Detektion ist daher nicht mit den bekannten Metalldetektoren möglich.

Die US 4,325,027 A offenbart einen Metalldetektor, wobei mit Hilfe von vorbestimmten Beziehungen verschiedene Metalle detektiert werden. Dabei werden Proben analysiert, und ein Sense-Signal erzeugt, das für die Nähe eines metallischen Objekts repräsentativ ist, und ein Unterscheidungssignal erzeugt, das für die Art des metallischen Objekts sowie dessen Nähe repräsentativ ist. Ein Anzeigesignal erzeugt akustische und visuelle Ausgänge unter der Steuerung des Unterscheidungssignals, das das Anzeigesignal bei Vorhandensein eines unerwünschten metallischen Objekts ohne Vorhandensein eines Zielobjekts ab- bzw. das Anzeigesignal in Gegenwart eines Zielobjekts anschaltet.

Die US 4,486,713 A offenbart eine Metalldetektorvorrichtung mit einer kontrollierten Phasenreaktion, um einen Betrieb mit reduzierten Bodeneffekten zu ermöglichen und gleichzeitig zwischen verschiedenen Metallarten zu unterscheiden. Es ist eine Phasenbeziehung vorgegeben, die unerwünschte Signale von mineralisierten Boden- und Abfallmetallen zurückweist und auf die Signale der gewünschten Metalle reagiert. Die algebraische Beziehung zwischen zwei Signalen wird so bestimmt, dass nur Eingangssignale, die in die gewünschte algebraische Beziehung fallen, zur Bereitstellung eines Ausgangssignals verwendet werden.

Aufgabe der Erfindung ist im oben beschriebenen Fall die vollständige Ausblendung der Moniereisen, so dass ausschließlich nur die Rohrleitung gesehen wird.

Dabei ist es egal, wie dicht die Moniereisen oder Bewehrungsstäbe stehen oder ob sie sich vor, hinter oder neben der Rohrleitung befinden. Auch kann die Rohrleitung aus dem gleichem Material sein wie die auszublendenden Moniereisen. Die Moniereisen sind nur ein beliebiges Beispiel. Mit der Erfindung können nahezu alle beliebigen metallischen Gegenstände ausgeblendet werden. Dazu gehören selbstverständlich auch die Effekte mineralisierter Böden.

Im Umkehrschluss kann natürlich auch gezielt nach einem bestimmten Gegenstand gesucht werden, wobei dann alle anderen Gegenstände ausgeblendet werden. Der zu suchende Gegenstand muss sich lediglich in der Form oder Metallart von den auszublendenden Gegenständen unterscheiden.

Es ist ferner Aufgabe der vorliegenden Erfindung ein Verfahren zur Ortung metallischer Objekte und Materialien dahingehend zu verbessern, dass eine zuverlässige Detektion eines zu detektieren Objekts auch dann möglich ist, wenn sich andere metallische Gegenstände im Detektionsbereich befinden.

Im Rahmen dieser Anmeldung werden unter "metallischen" Objekten auch lediglich Metall enthaltene Objekte verstanden. Unter einem "Objekt" wird in dieser Anmeldung ein zu detektierender Gegenstand verstanden, der z.B. in oder hinter anderen gleichartigen oder auch davon verschiedenen Gegenständen, wie Mauern oder Böden und dergleichen liegen kann und detektiert werden kann.

Grundlage der Erfindung ist die Patentanmeldung DE 10 2009 029 928 A1. In ihr wird ein Verfahren erläutert, bei dem in einer speziellen Spulenanordnung zwei gegenläufig geregelte Ströme zweier Sendespulen ein Empfangssignal in einer Empfangsspulenanordnung kontinuierlich zu "Null" ausregeln. Es sei ausdrücklich hingewiesen, dass es sich im Gegensatz zum Stand der Technik um eine kontinuierliche Regelung zu "Null" handelt, also auch, wenn Metall sich der Spulenanordnung 2.6 nähert.

Im Stand der Technik gibt es Verfahren, bei denen ohne Metallannäherung ein Empfangssignal "Null" erzeugt wird. Dies wird z.B. über die mechanische Ausrichtung der Sende- zur Empfangsspule erreicht, allg. bekannt unter der "Doppel - D"-Anordnung der Spulen (vgl. DE 103 01 951 A9). Oder zwei Empfangsspulen sind so innerhalb einer Sendespule angeordnet, dass sich das Empfangssignal aufhebt (vgl. DE 103 18 350 B3). Zur Umgehung mechanischer Toleranzen werden auch Hilfswindungen in Spulensysteme eingeschaltet, um ohne Metallannäherung möglichst ein Empfangssignal "Null" zu erreichen (vgl. DE 10 2004 047 189 A1.

In allen oben beschriebenen Verfahren wird also das Empfangssignal immer ohne Metalleinfluss auf "Null" mechanisch oder elektrisch justiert. Bei Metalleinfluss bleibt die - ohne Metalleinfluss - gefundene Justierung erhalten. Bei Metalleinfluss entsteht in diesen Verfahren ein Ausgangssignal der Empfangsspulenanordnung, das dann entsprechend ausgewertet wird.

Das in der DE 10 2009 029 928 A1 beschriebene, der vorliegenden Erfindung zugrunde liegende Verfahren regelt im Gegensatz zu den oben, im Stand der Technik sonst beschriebenen Verfahren kontinuierlich das Empfangssignal zu "Null", also auch bei Metallannäherung. Dabei tritt ein Effekt auf, den sich die hier vorgestellte Erfindung zunutze macht.

Um diesen Effekt besser zu verstehen, müssen die Eigentümlichkeiten des Systems näher erläutert werden. Fig. 2 zeigt eine nach der technischen Lehre der DE 10 2009 029 928 A1 ausgestaltete Spulenanordnung 2.6. Die Sendespulenanordnung umfasst zwei Spulen 2.1 sowie 2.2 und wird durch zwei gegeneinander geregelte Strömen 2.3 und 2.4 gespeist. Das Ausgangssignal der Empfangsspulenanordnung 2.2 wird mittels der Ströme 2.3 und 2.4 kontinuierlich zu "Null" ausgeregelt.

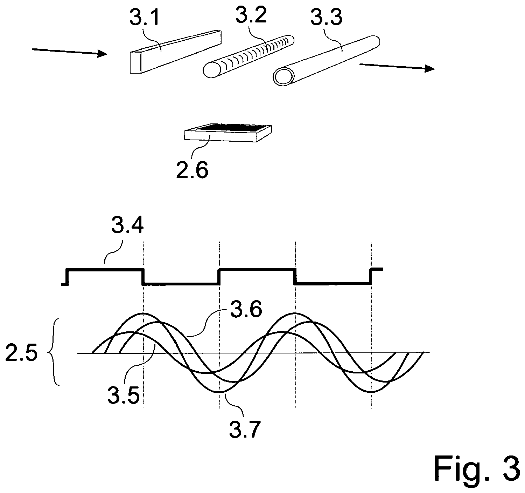

Um die vorliegende Erfindung besser zu erläutern, soll nun in der in Fig. 2 dargestellten Anordnung die Regelung abgeschaltet sein und daher sind beide Ströme 2.3 und 2.4 gleich groß. Bei Annäherung von Metall an die Spulenanordnung 2.6 entsteht daher am Ausgang des Vorverstärkers 2.7 ein Ausgangssignal 2.5. Fig. 3 veranschaulicht das dabei entstehende Signal 2.5 etwas detaillierter.

Die Kurve 3.4 stellt den Rechteckstrom durch die Sendespulenanordnung 2.6 aus der DE 10 2009 029 928 A1 dar, im beschriebenen Fall also die Ströme durch beide Sendespulen 2.1 und 2.2, jeweils zueinander invertiert. Nacheinander werden im dem vorliegenden Beispiel drei verschiedene metallische Gegenstände über die Spulenanordnung 2.6 geführt. Dabei ist 3.1 z.B. ein Metallstab mit quadratischem Querschnitt, 3.2 ein Moniereisen und 3.3 ein Metallrohr. Da die Regelung des "Empfangssignal zu Null" abgeschaltet ist, liegt bei Metallannäherung am Ausgang des Vorverstärkers 2.7 ein Signal 2.5 an. Dieses Signal unterscheidet sich je nach der Metallart oder Geometrie in Amplitude und Phase. In Fig.3 sind als Beispiel drei unterschiedliche Signalkurven 3.5, 3.6 und 3.7 für die drei Gegenstände 3.1, 3.2 und 3.3 dargestellt. Dies entspricht in etwa dem Stand der Technik unter Ausschluss der WO 2007/012502 A9, DE 10 2009 009 061 A1 und der DE 10 2009 021 804 A1

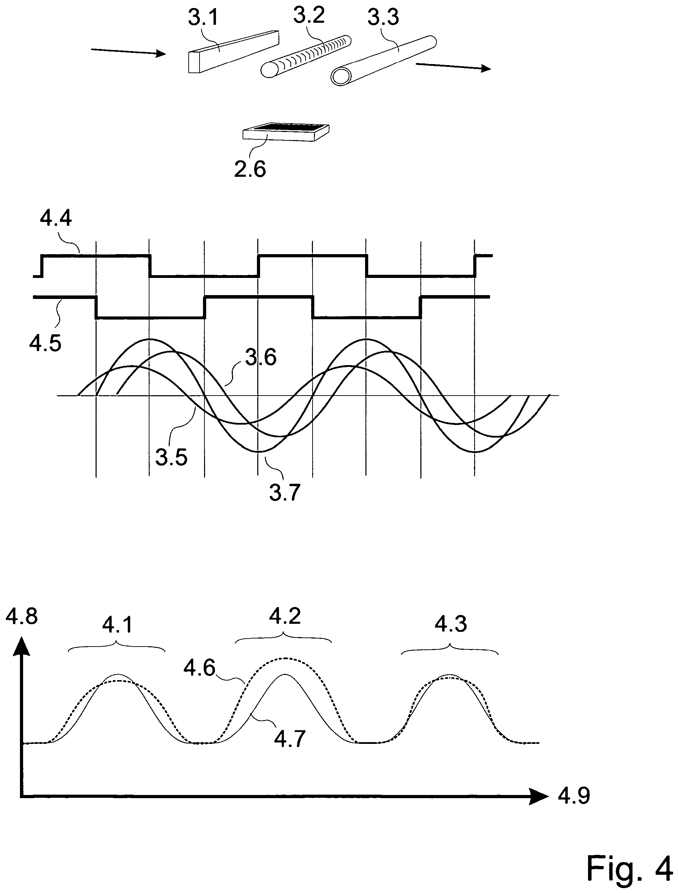

Es sind Verfahren bekannt, bei denen eine Auswertung der Signalkurven des Ausgangssignals einer beliebigen Spulenanordnung bei z.B. 0° und 90° der Phase des Sendestromes erfolgt. Als Ergebnis erhält man dann zwei Spannungswerte. Mit diesen beiden Spannungswerten kann dann eine Interpretation erfolgen, z. B. ob es sich um Eisen oder Buntmetall handelt. Es sei an dieser Stelle hingewiesen, dass die abgebildeten Signalkurven nur Beispiele sind und je nach Ausbildung der Spulenanordnung, der Wahl der Taktfrequenz und der Ausbildung der Elektronik durchaus anders aussehen können. Tatsache bleibt, dass sich die Kurven je nach Metallart oder Geometrie unterscheiden. Fig. 4 verdeutlicht das oben Gesagte: bei jedem der Gegenstände 3.1, 3.2 und 3.3 verändert sich Phase und Amplitude des Ausgangssignals des Vorverstärkers.

Wird das Ausgangssignal des Vorverstärkers mit dem Demodulationstakt 4.5 synchron demoduliert, ergibt sich beim Überstreichen des Sensors mit den drei oben genannten Gegenständen z.B. der Signalverlauf 4.6. Wird dagegen mit der um 90° verschobenen Phase 4.4 mit einem zweiten Synchrondemodulator demoduliert, ergibt sich der Signalverlauf 4.7.

Die untere Darstellung in Fig. 4 zeigt die Signalverläufe der Synchrondemodulationen, wenn die drei Gegenstände 3.1, 3.2 und 3.3 über den Sensor geführt werden. Die Funktion der Synchrondemodulation sei hier als bekannt vorausgesetzt. Der Signalverlauf 4.6 bzw. 4.7 bezeichnet hier das Ausgangssignal des jeweiligen Synchrondemodulators.

Zunächst wird das Metallrohr 3.3 über die Spulenanordnung 2.6 geführt, so wie in Fig. 4 oben dargestellt. Es entstehen z.B. die beiden Signalverläufe für die 0° und 90° Demodulation, die im Abschnitt 4.3 dargestellt sind. Bei gleicher Bewegung des Moniereisens 3.2 oder eines Bewehrungsstabes entstehen die Signalverläufe im Abschnitt 4.2, bei dem Metallstab 3.1 die Signalverläufe im Abschnitt 4.1. Nun kann aus diesen beiden Signalverläufen 4.6 und 4.7 eventuell auf die Art des detektierten Metalls geschlossen werden, so wie bereits im Stand der Technik erfolgt.

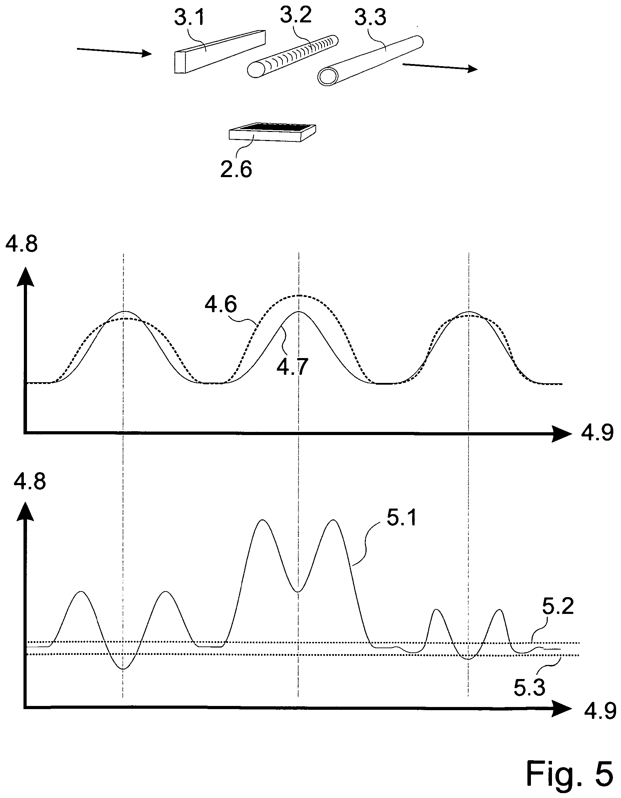

Eine mögliche Methode dazu ist die Differenzbildung aus den Signalverläufen 4.6 und 4.7, die in Fig. 5 als Differenzwertkurve 5.1 dargestellt ist. In optimaler Position der Gegenstände 3.1, 3.2 oder 3.3 über der Spulenanordnung 2.6, hier durch die senkrechte gestrichelte Linie angedeutet, wird z.B. mal der obere Schwellwert 5.2 überschritten oder mal der untere Schwellwert 5.3 unterschritten. Dies kann ausgewertet werden und einen groben Hinweis auf den detektierten Gegenstand geben, insbesondere auf die Metallart.

Aber man sieht sofort, dass bei seitlicher Annäherung des Gegenstandes an die Sensoreinheit schlecht zu interpretierende Signalverläufe entstehen. Somit erscheint diese Methode nicht geeignet, präzise Angaben über den detektierten Gegenstand zu machen. Insbesondere ändert sich der Kurvenverlauf 5.1 stark, wenn z.B. der detektierte Gegenstand aus der waagerechten in eine senkrechte Stellung gebracht wird.

Die bis hier gemachten Aussagen beziehen sich im Wesentlichen auf nicht geregelte Sendeströme und nicht kontinuierlich auf "Null" gehaltenem Ausgangssignal der Empfangsspuleneinheit und geben somit im Wesentlichen den Stand der Technik wieder.

### Nun zur Erfindung:

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Ausgehend von dem in der DE 10 2009 029 928 A1 vorgeschlagenem Verfahren, in dem zwei Sendeströme in einer speziellen Spulenanordnung so gegeneinander geregelt werden, dass ein Empfangssignal einer Empfangsspulenanordnung kontinuierlich "Null" ist, wird hier ein Verfahren beschrieben, das eine präzise "Ausblendung" bzw. "Detektion" eines oder mehrerer bestimmter metallischer Gegenstände erlaubt.

In der oben genannten Patentanmeldung wird die Information über die Anwesenheit vom Metall aus dem Regelwert gewonnen, der zur Ausregelung des Empfangsspulenausgangssignals zu "Null" dient. Null heißt, der Mittelwert des demodulierten Signals in der ersten Demodulationsphase 6.1 ist gleich groß dem Mittelwert der zweiten Demodulationsphase 6.2. Der Amplitudenunterschied des demodulierten Signals zwischen den beiden Demodulationsphasen wird durch die Regelung der Ströme in den Sendespulen also immer auf " Null" gehalten.

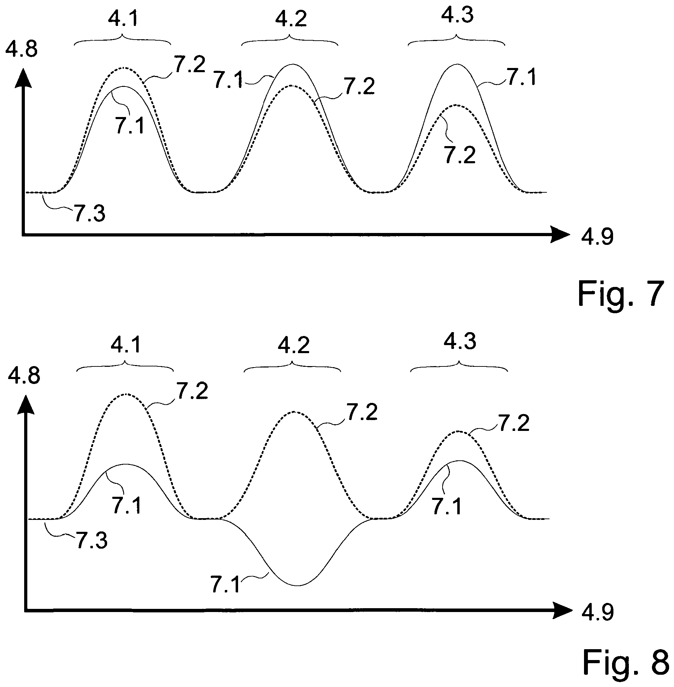

Um Missverständnisse zu vermeiden, soll an dieser Stelle näher auf die Signalkurven in Fig. 4, Fig. 5 und Fig. 6 eingegangen werden. Die Darstellung der Kurven 3.5, 3.6 und 3.7 in Fig. 3 zeigen das Signal 2.5 der Empfangsspulenanordnung ohne die "Regelung zu Null" bei Metallanwesenheit. Dieses Signal ist in der Fig. 4 nochmals dargestellt. Die Kurven 4.6 und 4.7 zeigen dann das mit 0 und 90 Grad demodulierte Signal 2.5. Die Kurven 6.5, 6.6 und 6.7 zeigen das entstehende Signal der Empfangsspulenanordnung nach Ausregelung zu "Null" bei Metallanwesenheit. Die Kurve 7.2 in Fig. 7 und Fig. 8 zeigt den Regelwert, der die Ströme der Sendespulen so regelt, dass ein Empfangssignal in der Empfangsspulenanordnung kontinuierlich zu "Null" wird. Die Kurve 7.1 in Fig. 7 und Fig. 8 zeigt das mit dem Demodulationstakt 4.4 demodulierte Signal 2.5 bei Metallanwesenheit.

Zur Klarstellung: Das Empfangssignal eines Taktzyklus wird in vorzugsweise etwa vier vorzugsweise gleiche Taktabschnitte, d.h. Einschaltzeitabschnitte eingeteilt. Im Takt wird eine Mehrzahl von vom Taktgenerator 13.6 mit demselben Takt getakteten Taktzyklen mit Taktabschnitten generiert.

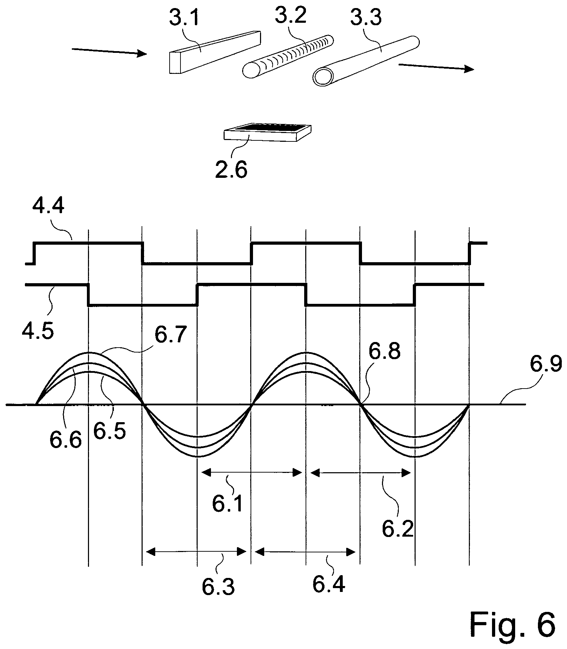

Ohne Anwesenheit von Metall ist somit kein Signal am Ausgang des Vorverstärkers 2.7 vorhanden. Das Ausgangssignal entspricht der Linie 6.9 in Fig. 6. Bei Annäherung von Metall kann es trotz weiterhin korrekter Ausregelung zu "Null" , d. h., bei der die Durchschnittswerte in den Taktabschnitten 4.5 bzw. den Demodulationsphasen 6.1 und 6.2 immer zueinander gleich groß sind, besser gesagt, durch die Stromregelung in den Sendespulen immer gleich groß gehalten werden, zu einem Signal kommen, dessen Nulldurchgänge 6.8 immer genau in die Mitte der Demodulationstakte 4.5 fallen. Dieses Signal kann mit einem weiteren, gegenüber dem Demodulationstakt 4.5 um 90° versetzten Demodulationstakt 4.4 mit einem zweiten Synchrondemodulator gemessen werden.

Es wird bewusst von "kann" gesprochen, da die Entstehung dieses Signals von der Phasenverschiebung des Empfangssignals durch die Metallart und/oder Geometrie abhängt. Es kann also auch der Fall eintreten, das bei Metallannäherung (bestimmte Metallart oder entsprechende Geometrie) keine Phasenverschiebung des Empfangssignals und somit auch keine Werteänderung am Ausgang des zweiten Synchrondemodulators entsteht. Dabei bleibt die Bedingung weiterhin erhalten, dass der Mittelwert des Vorverstärkerausgangssignals 2.5 in der ersten Demodulationsphase 6.1 immer dem Mittelwert in der zweiten Demodulationsphase 6.2 entspricht.

Nacheinander werden im Beispiel wieder der Metallstab 3.1, ein Moniereisen 3.2 und ein Metallrohr 3.3 über die Spulenanordnung 2.6 geführt. Im Rahmen dieser Anmeldung werden unter dem Begriff Moniereisen die verschiedenen Arten von Bewehrungsstäben und Baustahlmatten verstanden, die im Bauwesen verwendet werden. Fig. 6 zeigt die dann entstehenden Signalkurven 6.5, 6.6 und 6.7 mit den durch die Regelung "zentrierten" Nulldurchgängen 6.8. Es ist zu bemerken, dass sie alle derart "übereinander" liegen, dass sie den gemeinsamen Nulldurchgang 6.8 exakt immer an der gleichen Stelle haben und dass die maximalen und minimalen Amplituden der Signalkurven 6.5, 6.6 und 6.7 zum gleichen Zeitpunkt erfolgen.

Im nächsten Schritt wird dieses Signal mit einem gegenüber dem ersten Demodulationstakt 4.5 um 90° verschobenen Demodulationstakt 4.4 demoduliert. Dadurch entsteht beim Überstreichen der Spulenanordnung 1.4 mit den Metallgegenständen 3.1, 3.2 und 3.3 z.B. eine Kurve 7.1. Ohne Metalleinfluss hat die Kurve den Ruhewert 7.3. (Fig. 7, Fig. 8)

Überlagert man diese Kurve 7.1 mit der Regelwertkurve für die Regelung zu "Null", so stellt sich verblüffender weise heraus, das sich beide Kurven bei Metallannäherung streng gleichmäßig verändern, jedoch mit unterschiedlicher Amplitude.

Je nach Metallart oder Geometrie kann die Amplitude der Kurve 7.1 auch negative Werte annehmen, wie das Beispiel in Fig. 8 zeigt. Gleiches gilt unter bestimmten Umständen auch für die Kurve 7.2. Dem besseren Verständnis wegen wurde Kurve 7.2 in allen Darstellungen bei Metallannäherung mit positiver Amplitude dargestellt.

In einem weiteren Schritt wird die Kurve 7.1 nun mit einem Wert mit positiven oder negativen Vorzeichen multipliziert, so dass sie gleich groß der Kurve 7.2 wird. Dieser Multiplikator wird vorzugsweise aus der oder den Regelgrößen ermittelt, wie z.B. aus dem Verhältnis der Regelgrößen. Dies kann nur geschehen, wenn Metall anwesend ist und sich ein Wert für 7.1 oder 7.2 einstellt, der ungleich dem Ruhewert 7.3 ist. Der Ruhewert 7.3 wird im Weiteren mit Null bezeichnet und beschreibt hier die Werte, die sich ohne Metallanwesenheit einstellen. Im Prinzip entspricht dieser Schritt einer "Amplitudenregelung" bei der die Amplitude geregelt bzw. auch invertiert werden kann.

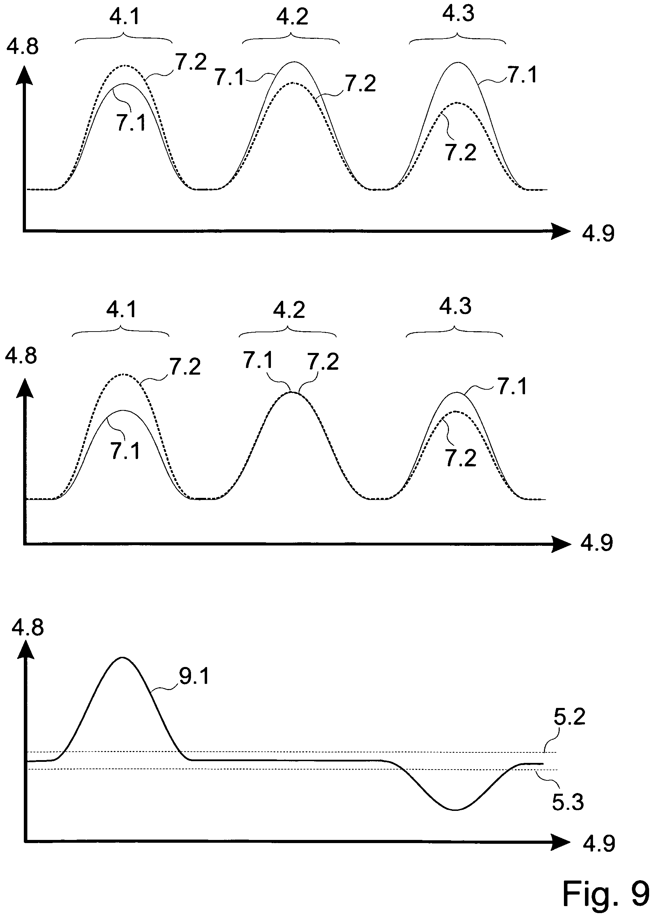

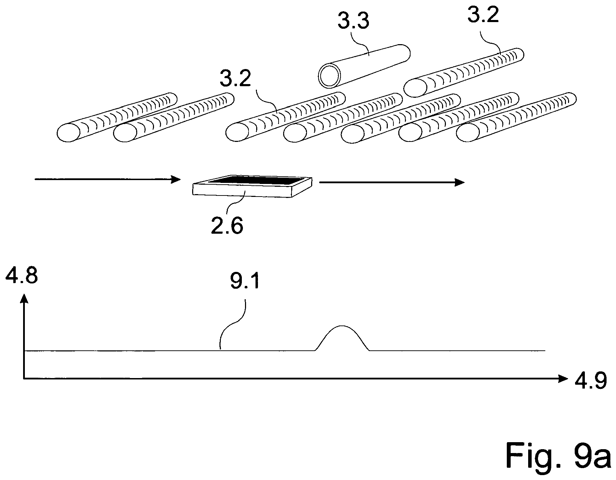

Fig. 9 fasst die Schritte zusammen. In der oberen Darstellung wurde der Wert 7.1 noch nicht in der Amplitude geregelt. Wert 7.1 und 7.2 unterscheiden sich noch.

In der mittleren Darstellung wurde der Wert 7.1 mit z. B. 0,9 multipliziert, so dass sich der Kurvenverlauf von 7.1 und 7.2 im Abschnitt 4.2 vollständig deckt. Zur Erinnerung: im Abschnitt 4.2 wurde das Moniereisen über die Spulenanordnung 2.6 geführt. Die untere Darstellung zeigt nun den Differenzwert 9.1 der Kurven 7.1 und 7.2. Im Abschnitt 4.2, in dem das Moniereisen 3.2 über die Spulenanordnung 2.6 geführt wurde, wird kein Differenzwert gebildet. Dies gilt erstaunlicherweise auch, wenn das Moniereisen 3.2 nicht nur flach, sondern auch senkrecht über die Spulenanordnung geführt wird. Versieht man den Differenzwert mit Schwellwerten 5.2 und 5.3, so kann das Überstreichen der Spulenanordnung 2.6 mit dem Metallstab 3.1 oder dem Metallrohr 3.3 einwandfrei detektiert werden, während das Moniereisen 3.2 "unsichtbar" ist. Die Bewegung eines entsprechenden Sensors 2.6 an einer Anzahl beliebig angeordneter Moniereisen entlang zeigt Fig. 9a. Die Moniereisen führen zu keiner Veränderung der Kurve 9.1, lediglich das Metallrohr 3.3 wird erkannt.

"Unsichtbar" heißt in diesem Fall, das ein einzelnes oder mehrere gebündelte, gekreuzte oder in den diversesten Winkeln angeordnete Moniereisen in beliebiger Entfernung zum Sensor nicht "gesehen" werden, jedoch z.B. ein Metallrohr vor, hinter oder neben den Moniereisen einwandfrei erfasst wird. Und dies gilt auch, wenn das Metallrohr aus dem gleichen Material wie z.B. Eisen besteht. Dabei muss nur ein einziges Moniereisen "eingelernt" werden, um eine größere Anzahl gleicher Moniereisen auszublenden.

So kann in der Praxis hinter einer Doppellage von eng an eng gepackten 8mm Moniereisen aus Baustahl eine kleine Münze in 150 mm einwandfrei detektiert werden. (Sensor: Spulenanordnung aus DE 10 2009 029 928 A1 mit 60 mm Durchmesser, Abstand der Moniereisen zum Sensor = 50 mm, Abstand 20-EU Cent-Münze = 150 mm)

Das "unsichtbar Machen" kann nun bei jedem beliebigen metallischen Gegenstand durchgeführt werden, auch z.B. bei metallisierten Folien, mineralisierten Böden usw. Dazu wird der Sensor an den auszublendenden Gegenstand gebracht, die Kurven 7.1 und 7.2 per automatischem Abgleich (Software) oder per Hand (Potentiometer) zur Deckung gebracht. Nach diesem einfachen Verfahren ist der besagte Gegenstand für den Sensor "unsichtbar".

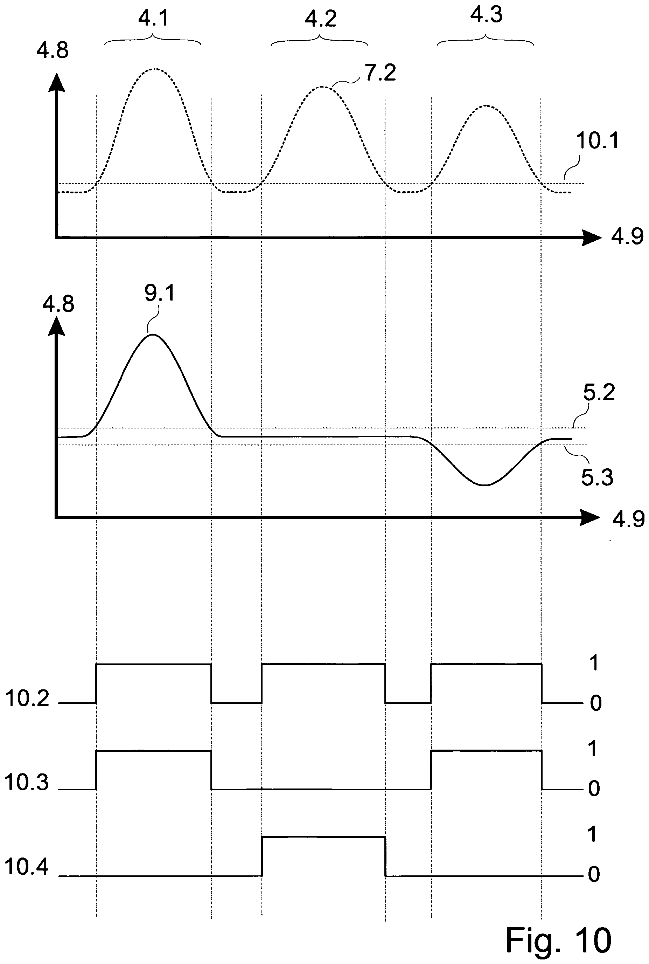

Im Umkehrschluss kann mit dieser Anordnung natürlich auch gezielt nach einem bestimmten metallischen Gegenstand gesucht werden. Dazu werden die Kurven 7.2 und 9.1 z.B. über Schwellwerte 10.1, 5.2 und 5.3 ausgewertet. Wurde der zu suchende Gegenstand, im Beispiel wieder das Moniereisen 3.2, eingelernt, also die Kurven 7.2 und 7.1 bei Anwesenheit des entsprechenden Gegenstandes zur Deckung gebracht, zeigt die Kurve 9.1 keine Veränderung bei Annäherung des besagten Gegenstandes an den Sensor. In diesem Fall wurde keiner der Schwellwerte 5.2 und 5.3 über- bzw. unterschritten. Das Ergebnis der digitalen Auswertung von Kurve 9.1 zeigt die Kurve 10.3 in Fig. 10. Während der quadratische Metallstab und das Metallrohr zu einer " 1 " führte, bleibt während der Annäherung mit dem Moniereisen die Kurve 10.3 auf " 0 ". Eine weitere Auswertung der Kurve 7.2 zeigt jedoch alle metallischen Gegenstände als " 1 ", dargestellt in Kurve 10.2. Durch einfache logische Verknüpfung lässt sich aus den Kurven 10.2 und 10.3 die Kurve 10.4 ableiten. Sie zeigt die Anwesenheit des zu suchenden Gegenstandes an, während alle anderen metallischen Gegenstände "unsichtbar" sind.

In der oben beschriebenen Lösung wurde die Kurve 7.1 in der Amplitude der Kurve 7.2 angepasst. Selbstverständlich kann auch umgekehrt die Kurve 7.2 in der Amplitude der Kurve 7.1 angepasst werden. In beiden Fällen ist das Ergebnis der Differenzbildung, also die Kurve 9.1, gleich. Werden die Kurven 7.1 und 7.2 durch einen gegebenen Multiplikatorwert automatisch per Software oder manuell z.B. mittels eines Potentiometers zur Deckung gebracht, kann z.B. dieser Multiplikatorwert als Kennung für einen bestimmten Gegenstand aus einer Tabelle den detektierten Gegenstand in Klartext bezeichnen. In dieser Tabelle können z.B. früher ermittelte Multiplikatoren und/oder Regelwerte, bei dem/denen auch bei Metallkontakt die Signale in Deckung sind, gespeichert sein. Das bedeutet: beim Überstreichen des Sensors mit den drei im Ausführungsbeispiel genannten Gegenständen könnte dann in einem Display nacheinander z.B. die Bezeichnungen "Metallstab, Messing", "8 mm Moniereisen, Baustahl", "30 mm Rohrleitung, Kupfer" erscheinen.

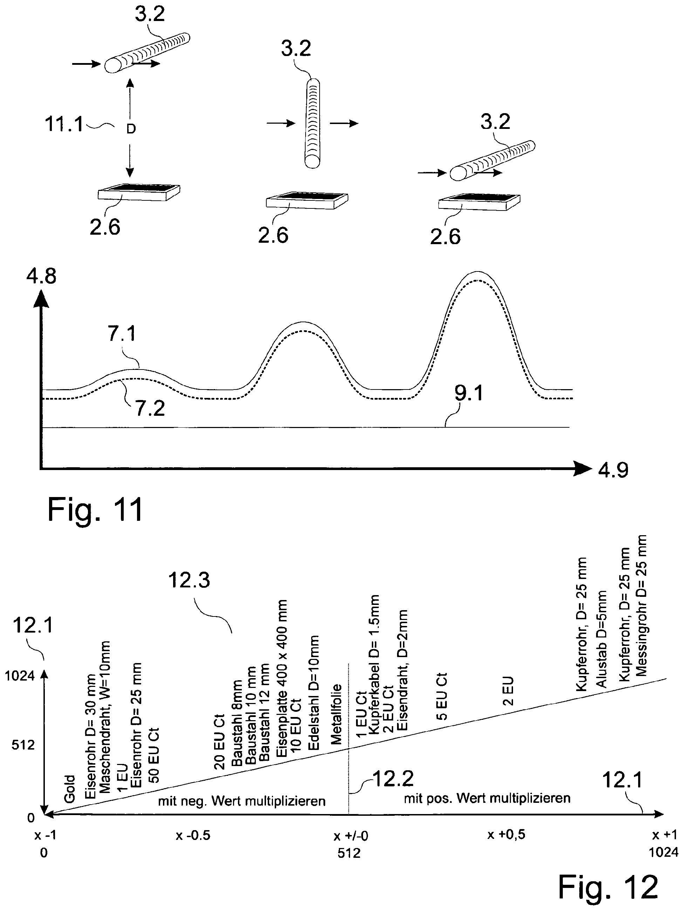

Bevor auf die schaltungstechnische Lösung näher eingegangen wird, noch ein weiterer Vorteil der Erfindung:
Oft ist es erwünscht, die Tiefe eines Gegenstandes in der Wand oder im Boden bestimmen zu können. Wie bereits oben beschrieben, können Gegenstände mit ihrer konkreten Benennung erkannt werden, deren spezifische Multiplikationswerte, also sozusagen deren Kennung, in einem Speicher der Detektorvorrichtung eingespeichert sind. Dies geschieht in der oben beschriebenen Erfindung weitgehend unabhängig von der Entfernung des Gegenstandes vom Sensor. Selbstverständlich muss er zu einer auswertbaren Wertänderung der Kurve 7.1 bzw. 7.2 führen. Fig. 11 zeigt die Veränderungen der Kurven 7.1 und 7.2 wenn z.B. das Moniereisen 3.2 in verschiedenen Entfernungen D (11.1) oder Positionen über den Sensor 2.6 geführt wird. Zum besseren Verständnis wurden die Kurven 7.1 und 7.2 in Fig. 11 getrennt dargestellt, im praktischen Fall würden sie deckungsgleich sein. Die Differenz 9.1 der Kurven 7.1 und 7.2 zeigt dann keine Veränderung bei Bewegung des Moniereisens über den Sensor 2.6.

Wurde im Ausführungsbeispiel das Moniereisen erkannt, so kann nun aus der notwendigen Veränderung der Amplitude der Kurve 7.1 und über einen entsprechenden, in der Tabelle für "Moniereisen" hinterlegten Umrechenwert die Tiefe, bzw. der Abstand Sensor-Moniereisen ermittelt werden.

Das Beispiel einer solchen Auswertung zeigt Fig.12. Der Einfachheit halber wird von einer digitalen Regelung der Amplitude des Signals 7.1 ausgegangen. Der Regelbereich soll über 1024 Schritte erfolgen. In der Hälfte des Regelbereichs, also bei Schritt 512 erfolgt keine Veränderung des Wertes der Kurve 7.2. Der Wert 0 repräsentiert eine Multiplikation mit minus 1, 1024 dann entsprechend einer Multiplikation mit plus eins. Je nach Ausführung der Elektronik können auch größere oder kleinere maximale Multiplikationswerte verwendet werden. Wesentlich ist nur, dass sich die beiden Kurven 7.1 und 7.2 zur Deckung bringen lassen. Auf der Strecke 12.1 sind die Multiplikationswerte von "Multiplikation mit minus eins" (x (-1)) über den neutralen Multiplikationswert 12.2 bis zur "Multiplikation mit plus eins" und die Metallgegenstände 12.3 aufgeführt, die bei dem entsprechenden Multiplikationsfaktor den Differenzwert 9.1 der Kurven 7.1 und 7.2 zu null werden lässt. Auf eine maßstabsgerechte Darstellung musste in der Darstellung in Fig. 12 verzichtet werden, jedoch ergibt sich ein grober Überblick einiger bekannter Metallgegenstände inkl. der in Europa gebräuchlichen Münzen.

Wurde also bei einem bestimmten Multiplikationswert eine Differenz der Kurven 7.1 und 7.2 zu null erreicht, kann der dem Multiplikationswert entsprechende Gegenstand aus einer Tabelle zugeordnet werden.

### Schaltungstechnische Ausführung:

Die nachfolgende Beschreibung zeigt nur ein Ausführungsbeispiel auf, es können auch andere Schaltungsvarianten eingesetzt werden. Maßgebend ist nur, dass nach der beschriebenen Methode metallische Gegenstände ausgeblendet oder gezielt detektiert werden können.

Voraussetzung ist eine Schaltung, die die Ströme der Sendespulen 13.2 und 13.3 so beeinflusst, das sie einen Zustand an der oder den Empfangsspulen 13.4 erreichen, bei dem das Ausgangssignal der Spulen 13.4, bzw. das Ausgangssignal 2.5 eines nachgeschalteten Vorverstärkers 2.7 mit und ohne Metallanwesenheit zu "Null" wird. Null heißt, der Mittelwert des demodulierten Signals z.B. bei Synchrondemodulation in der ersten Demodulationsphase 6.1 ist gleich groß dem Mittelwert der zweiten Demodulationsphase 6.2. Der Amplitudenunterschied des demodulierten Signals zwischen den beiden Demodulationsphasen wird also durch die Regelung der Ströme in den Sendespulen immer auf "Null" gehalten.

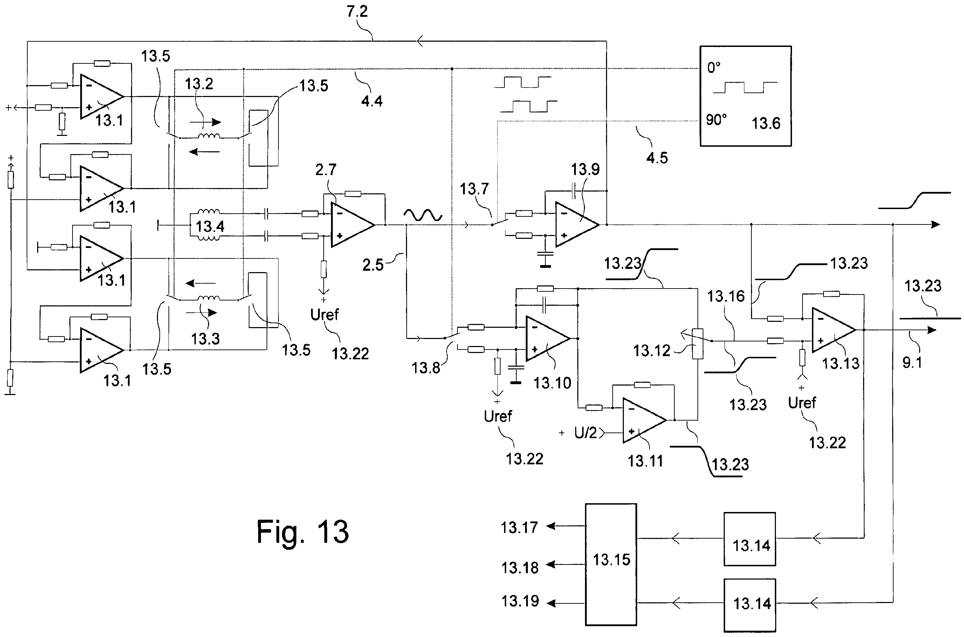

Im Ausführungsbeispiel in Fig. 13 werden dazu mit dem Takt 4.4 die Schalter 13.5 so gesteuert, dass der Strom durch die Spulen 13.2 und 13.3 taktsynchron die Richtung wechselt. Die Taktfrequenz kann beliebig gewählt werden, z.B. 100 KHz. Die für einen bestimmten Strom benötigte Spannung wird von den Operationsverstärkern 13.1 bereitgestellt. Diese werden wiederum durch den Regelwert 7.2 so angesteuert, das bei einem vorgegebenen Regelwert 7.2 der Strom durch die Sendespulen 13.2 und 13.3 gleich groß ist. Bei Veränderung des Regelwertes 7.2 in eine Richtung steigt der geschaltete Strom z.B. in der ersten Sendespule 13.2 an, während er in der zweiten Sendespule 13.3 abfällt. Bei Veränderung des Regelwertes in die andere Richtung fällt der Strom in der ersten Sendespule 13.2 ab, während er in der zweiten Sendespule 13.3 ansteigt. Somit ist gewährleistet, dass über den Regelwert 7.2 immer der getaktete Stromfluss in den Sendespulen 13.2 und 13.3 so zueinander geregelt werden kann, dass das Empfangssignal der Spulen 13.4 bzw. des Ausgangssignals 2.5 des Verstärkers 2.7 kontinuierlich zu "Null" wird.

Der Takt 4.4 wird vom Taktgenerator 13.6 geliefert und wird im Ausführungsbeispiel mit der Phase "0" bezeichnet und steuert die Umschalter 13.5 für den Spulenstrom an. Ein weiterer um 90° versetzter Takt 4.5 steuert einen ersten Schalter 13.7 für eine erste Synchrondemodulation. Welche der Taktsignale 4.4 bzw. 4.5 mit "0" und "90" bezeichnet werden, spielt keine Rolle, wesentlich ist, dass die Phasenverschiebung von 4.4 und 4.5 vorzugsweise 90° beträgt.

13.9 ist ein hochverstärkender Vergleicher für die im Takt 4.5 geschalteten Ausgangssignale des Verstärkers 2.7. Somit werden die in der positiven Taktphase liegenden gemittelten Signalanteile mit denen in der negativen Taktphase liegenden verglichen. "Hochverstärkend" heißt in diesem Fall, das auch kleinste Abweichungen der in den Taktphasen liegenden gemittelten Signalanteile zu einer deutlichen Abweichung des Regelwertes 7.2 führen. In der Praxis ist die DC-Verstärkung dieser Stufe größer 120 dB.

Im ausgeregelten Zustand entspricht das Ausgangssignal des Verstärkers 2.7 dann der Kurve 6.9 in Fig. 6, bzw. den Signalkurven 6.5, 6.6 und 6.7 bei entsprechendem Metalleinfluss. Durch die kontinuierliche Regelung entsteht der Nulldurchgang 6.8 immer exakt an der gleichen Stelle.

Mit dem Takt 4.4 wird ein weiterer Schalter 13.8 für eine zweite, gegenüber der ersten um 90° versetzte Synchrondemodulation angesteuert. Mit ihr werden die in der positiven Taktphase liegenden gemittelten Signalanteile mit denen in der negativen Taktphase liegenden verglichen. Der Vergleicher 13.10 besitzt im Gegensatz zum Vergleicher 13.9 nur eine mäßige Verstärkung, z.B. 2-fach. Das Ausgangssignal des Vergleichers 13.10 ist in Fig. 7 als Kurve 7.1 dargestellt. Ohne Metalleinfluss hat das Ausgangssignal des Vergleichers den Ruhewert 7.3. Je nach Metallart oder Geometrie kann sie bei Metalleinfluss mehr oder weniger in die eine oder andere Richtung abweichen. Das Ausgangssignal des Vergleichers 13.10 wird nun einmal direkt und einmal über die Invertierstufe 13.11 invertiert an die Anschlüsse eines Reglers 13.12 gegeben. Mit ihm kann das Ausgangssignal des Vergleichers 13.10 mit beliebigen Vorzeichen in der Größe geregelt werden.

Nach diesen Maßnahmen steht nun ein Regelwert 7.2 und ein in Amplitude und Vorzeichen regelbarer Wert 13.16 zur Verfügung. Beide Werte verändern sich bei Metalleinfluss, auch bei verschiedenen Abständen streng gleichmäßig, jedoch möglicherweise mit unterschiedlicher Amplitude. Die obere Darstellung in Fig. 9 verdeutlicht dies. Dabei entspricht die Kurve 7.1 der noch ungeregelten Kurve 13.16.

Der Regelwert 7.2 und der Wert 13.16 werden dem Differenzverstärker 13.13 zugeführt. Ohne Metalleinfluss hat der Regelwert 7.2 und der Wert 13.16 keine Differenz, so dass am Ausgang des Differenzverstärkers 13.13 keine Differenzinformation anliegt. Im Ausführungsbeispiel entspricht der Ausgangswert dann der Referenzspannung 13.22 bzw. der Kurve 9.1.

Soll nun ein bestimmter Gegenstand, z.B. ein Moniereisen, bei der Metalldetektion ausgeblendet werden, wird zunächst dieser Gegenstand in die Nähe des Metalldetektors gebracht. In der Regel wird sich dadurch am Ausgang des Differenzverstärkers 13.13 der Ausgangswert 9.1 ändern, das heißt, er wird ungleich der Referenzspannung 13.22. Nun wird mit dem Regler 13.12 der Wert 13.16 so lange verändert, bis der Ausgangswert 9.1 wieder der Referenzspannung 13.22 entspricht.

Fig. 11 zeigt die beiden Kurven der Werte 7.1 und 7.2. Kurve 7.1 entspricht dann dem geregelten Wert 13.16. Die Werte beider Kurven sind auch bei verschiedenen Abständen des Metallgegenstandes immer gleich, so dass bei dem auszublendenden Gegenstand keine Differenzkurve 9.1 entsteht. Dieser Metallgegenstand wird also nicht erkannt. Die Kurven 13.23 in Fig. 13 veranschaulichen das oben Gesagte. Alle anderen Metallgegenstände führen jedoch zu einer Ungleichheit des Differenzwertes 9.1 von der Referenzspannung 13.22.

Diese Ungleichheit kann nun z.B. über Schwellwerte erfasst werden. In der unteren Darstellung der Fig. 9 ist dies dargestellt. Der Differenzwert 9.1 überschreitet bei der Annäherung des Metallstabes 3.1 den oberen Schwellwert 5.2, bei Annäherung des Metallrohres 3.3 den unteren Schwellwert 5.3. Die Annäherung des Moniereisens 3.2 führt dagegen zu keiner Veränderung des Differenzwertes 9.1.

Es hat sich herausgestellt, dass mit diesem Verfahren auch eine Mehrzahl auszublendender Gegenstände ausgeblendet werden, auch wenn nur ein einzelner dieser Gegenstände eingelernt wurde. In der Praxis bedeutet das: nur ein Moniereisen muss eingelernt werden, um auch ein Bündel von mehreren Moniereisen auszublenden. Auch das Überstreichen nur mit dem Ende des Moniereisens wird einwandfrei ausgeblendet. Alle anderweitigen Metallgegenstände, also auch größer oder kleiner als der auszublendende Gegenstand werden dagegen erkannt.

Führt z.B. eine Münze in einem Abstand von 15 cm zu einem bestimmten Wert 9.1, so wird sich dieser Wert nicht ändern, auch wenn zwischen Münze und Sensor oder seitlich oder hinter der Münze ein oder ein Bündel von Moniereisen bewegt wird.

Im Ausführungsbeispiel wurde der Ausgangswert des Vergleichers 13.10 geregelt. Es kann aber auch der Regelwert 7.2 geregelt werden. Wahlweise oder auch beide. Es kommt nur darauf an, dass bei dem "eingelernten" Gegenstand die Eingangswerte des Differenzverstärkers 13.13 gleich groß sind.

Im Ausführungsbeispiel Fig. 13 werden die beiden Werte 7.2 und 9.1 jeweils den Schwellwertschaltern 13.14 zugeführt. Deren Ausgänge werden in einer weiteren einfachen Logik so verknüpft, dass
ein Ausgangswert 13.17 für "alle Metallgegenstände",
ein Ausgangswert 13.18 für "alle Metallgegenstände mit Ausblendung unerwünschter Gegenstände" und
ein Ausgangswert 13.19 bei "nur gesuchter" (=ausgeblendeter) Gegenstände entsteht.

Bei entsprechender Auswertung kann aus dem Ausgangswert des Vergleichers 13.10 auch auf die detektierte Metallart geschlossen werden. Das beschriebene Verfahren kann natürlich nicht nur metallische Gegenstände, wie das Beispiel "Moniereisen" vollständig ausblenden. Es eignet sich auch hervorragend zur Unterdrückung sogenannter "Bodeneffekte" mineralisierter Böden.

Im Ausführungsbeispiel wurde der Takt 0° für die Ansteuerung der Spulenströme in den Sendespulen 13.2 bzw. 13.3 und für eine erste, und ein um 90° verschobener Takt für eine zweite Demodulation verwendet. Je nach Ausführung der Schaltung kann auch ein von 0° abweichender Takt verwendet werden. Vorzugsweise wird aber der Versatz der beiden Demodulationstakte zueinander 90° betragen. Weiter wurde im Ausführungsbeispiel der jeweilige Mittelwert des Signals 2.5 während der jeweiligen Taktphase verwendet. Bei entsprechend sinusförmiger Ausbildung des Empfangssignals 2.5 reicht auch ein kurzzeitiges Abtasten (sample + hold) zu entsprechenden Zeitpunkten vollständig aus. Eine sinusförmige Ausbildung kann z.B. durch einen Resonanzkondensator an den Empfangsspulen 13.4 erreicht werden.

Wird eine Spezifizierung der detektierten Gegenstände mit entsprechenden Tiefenangaben gewünscht, so wird wahrscheinlich eine µP-basierte Lösung sinnvoll sein. Ein Beispiel soll die Funktion verdeutlichen:
Ein nach dem oben beschriebenen Verfahren erstellter Metalldetektor wird an einer Wand entlang bewegt. Detektiert er Metall, so kann in einem entsprechenden Display z.B. folgende Darstellung erscheinen: Kupferrohr, Durchmesser 30 mm, Tiefe 70 mm. Der Metalldetektor wird weiterbewegt, es erscheint bei weiterer Metalldetektion z.B. Baustahl, Durchmesser 8 mm, Tiefe 55 mm usw. Da viele bekannte Gegenstände wie z.B. Baustahl mit 8, 10 oder 16 mm Durchmesser bestimmte, aber unterschiedliche "Korrekturfaktoren" für den Wert 13.16 haben, können diese in einem Speicher hinterlegt werden. Das Gleiche gilt z.B. für div. Rohre, Stromleitungen usw.

Im einfachsten Fall wird bei Metalldetektion der in einer µP- basierten Lösung durch eine mathematische Funktion ersetzte Regler 13.12 so lange verändert, bis der Ausgangswert 9.1 den Wert 13.22 annimmt, also bis "keine Metalldetektion" erreicht ist. Der dafür notwendige Wert der mathematischen Funktion entspricht dann einem vorab bei diesem Wert hinterlegten "Gegenstand", z.B. 8 mm Baustahl, so dass diese Angabe auch im Display erscheinen kann.

Parallel wird hierzu der Regelwert 7.2 erfasst. Dieser Wert ist proportional zur Entfernung und kann z.B. direkt in cm Abstand umgerechnet werden.

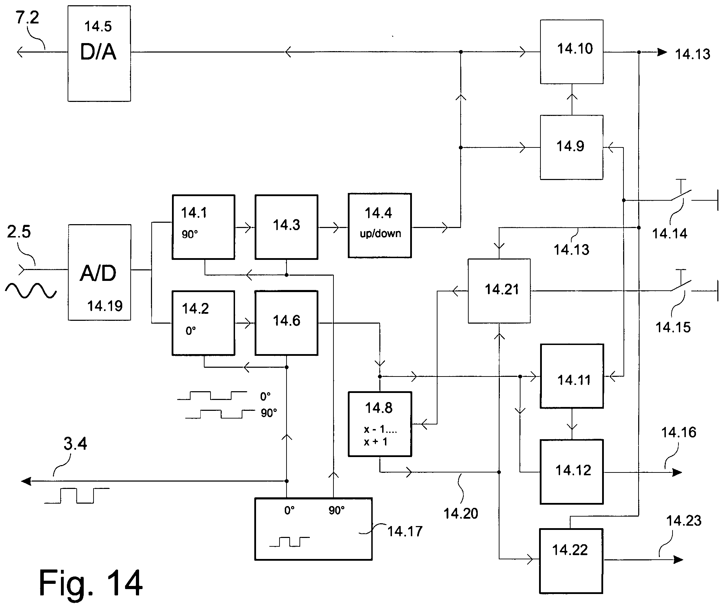

Fig. 14 zeigt ein Ausführungsbeispiel einer µP-basierten Lösung. Das Ausgangssignal 2.5 des Vorverstärkers wird dem Analog-Digitalwandler 14.19 zugeführt. Eine erste digitale Mittelwertbildung 14.1 bildet den Mittelwert je Taktphase bei einer Phasenverschiebung von 90° gegenüber dem Sendetakt 3.4. Der digitale Komparator 14.3 vergleicht den Mittelwert in der positiven Taktphase gegenüber dem Mittelwert in der negativen Taktphase. Das Ergebnis wird einem up/down Zähler 14.4 zugeführt. Im D/A Wandler 14.5 wird der Zählerstand in einen analogen Wert gewandelt, der als Regelwert 7.2 die Ströme in den Sendespulen 13.2 und 13.3 steuert. Der Zähler 14.4 zählt bei jeder Taktphase entweder rauf oder runter so lange, bis sich ein stabiler Zustand der Regelung einstellt und das Signal 2.5 der Darstellung in Fig. 6 entspricht. Ohne Metalleinfluss erfolgt also kein Ausgangssignal, entsprechend der Kurve 6.9, mit Metalleinfluss entstehen Kurven wie z.B. 6.5, 6.6 oder 6.7. Maßgeblich ist hier wieder, dass der Nulldurchgang 6.8 immer an genau gleicher Stelle, z. B. beim Taktwechsel von Takt 4.4 erfolgt. Auf Tastendruck 14.14 wird in einem ersten Wertespeicher 14.9 ein aktueller Zählerwert aus dem Zähler 14.4 eingelesen. Dies kann z.B. in einer Situation ohne Metalleinfluss geschehen. In der Differenzbildung 14.10 wird die Differenz des gespeicherten Zählerwertes ohne Metalleinfluss mit dem aktuellen Wert z.B. bei Metalleinfluss ermittelt und als Annäherungswert 14.13 eines beliebigen Metallgegenstandes ausgegeben. Mit anderen Worten: Taste 14.14 führt einen Abgleich ohne Metalleinfluss aus, um evtl. Ungenauigkeiten der Elektronik oder des Spulensystems auszugleichen.

In einer zweiten digitalen Mittelwertbildung 14.2 wird der Mittelwert des Signals 2.5 bei der Taktphase 0° ermittelt. Die getaktete Invertierstufe 14.6 wechselt mit dem Takt 3.4 das Vorzeichen des Mittelwertes, so dass der Ausgangswert dem Ausgangswert eines herkömmlichen analogen Synchrondemodulators entspricht. Der dabei entstehende "Kurvenverlauf" der digitalen Ausgangswerte für verschiedene Metallgegenstände entspricht der Kurve 7.1 in Fig. 7 bzw. Fig. 8. Die oben genannten Ausgangswerte werden der Multiplikationsstufe 14.8 und einem zweiten Wertespeicher 14.11 zugeführt. Im Wertespeicher 14.11 wurde über den Tastendruck 14.14 während der Situation ohne Metalleinfluss (siehe oben) der Ausgangswert der Invertierstufe 14.6 gespeichert. In der Differenzbildung 14.12 wird die Differenz des gespeicherten Wertes mit dem aktuellen Wert z.B. bei Metalleinfluss ermittelt und als Materialbestimmungswert 14.16 ausgegeben. In diesem Wert steckt z.B. eine Information über den Metallgegenstand, z.B. weicht der Wert bei Eisen in eine Richtung ab, bei Buntmetall in die andere Richtung.

Die Multiplikationsstufe 14.8 kann den Ausgangswert der Invertierstufe 14.6 beliebig abschwächen oder verstärken bzw. auch invertieren. Dazu wird auf Tastendruck 14.15 der in seiner Amplitude oder Polarität manipulierte Ausgangswert 14.20 bei Metalleinfluss in der Vergleicherstufe 14.21 mit dem aktuellen Wert 14.13 verglichen. Bei Abweichung regelt die Vergleicherstufe 14.21 die Multiplikationsstufe so lange nach, bis Wert 14.20 und Wert 14.13 genau gleich groß sind. Dies ist in Fig. 11 dargestellt. Zur besseren Sichtbarmachung des Gleichlaufes beider Kurven wurden sie versetzt dargestellt. In der Praxis liegen sie dagegen genau übereinander.

Mit dieser Maßnahme wurde der Metallgegenstand "eingelernt". Bei Annäherung des eingelernten Gegenstandes verhalten sich die Wertänderungen der Werte 14.13 und 14.20 gleich. Bei allen anderen Metallgegenständen verändern sich zwar auch die Werte 14.13 und 14.20, jedoch auf unterschiedliche Art.

Um diese anderen Metallgegenstände eindeutig zu erkennen, werden die Werte 14.13 und 14.20 in der Differenzbildung 14.22 verglichen und der Differenzwert als Ausgangswert 14.23 ausgegeben. Dieser Ausgangswert 14.23 beinhaltet nun die Ausblendung des eingelernten Gegenstandes.

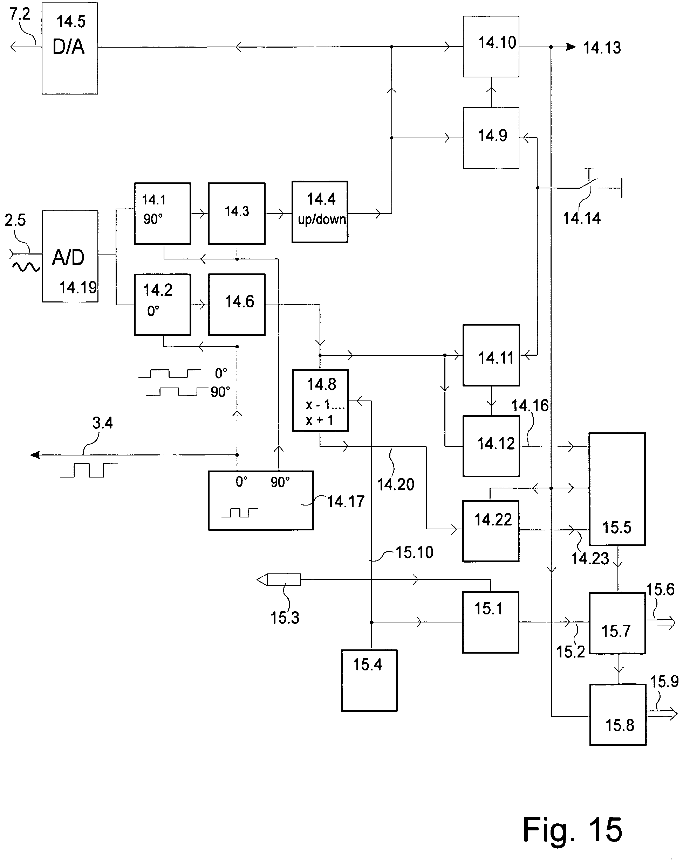

Im Umkehrschluss kann natürlich aus den Werten 14.13, 14.16 und 14.23 auf einen bestimmten Gegenstand geschlossen werden. Dies wird erreicht, indem die Multiplikationsstufe 14.8 regelmäßig alle möglichen Multiplikationswerte durchrechnet. Im Ausführungsbeispiel in Fig. 15 liefert dazu ein Multiplikationswertgenerator 15.4 die entsprechenden Multiplikationswerte 15.10. So kann z.B. alle 20 ms der gesamte Wertebereich der Multiplikationsstufe 14.8 überstrichen werden. Bei Metallanwesenheit wird dabei bei mindestens einem Multiplikationswert 15.10 ein Zustand erreicht, bei dem der Ausgangswert mit Ausblendung 14.23 (entsprechend Kurve 9.1) Null ist, während der Annäherungswert für einen beliebigen Metallgegenstand 14.13 und der Materialbestimmungswert 14.16 ungleich null ist. Dieser entsprechende Wert 15.10 kann dann in einer Tabelle zugeordnet werden, die eine Anzahl allgemein bekannter Gegenstände, wie z.B. 8mm Baustahl oder 25 mm Kupferrohr usw. enthält. In der Praxis konnten so über hundert verschiedene Gegenstände identifiziert werden.

Da die magnetischen Eigenschaften eines Metallgegenstandes temperaturabhängig sind, kann ein Temperatursensor, der die Umgebungstemperatur bzw. die Temperatur des erfassten Metallgegenstandes misst, dem Multiplikationswert 15.10 einen entsprechenden Korrekturfaktor hinzufügen. Der korrigierte Wert 15.2 entspricht jetzt dem Kennwert für einen bestimmten Metallgegenstand, der im Klartextspeicher 15.7 abgerufen und z.B. als Klartext 15.6 ausgegeben wird. Die Freigabe zur Klartextausgabe erfolgt nur bei Metalldetektion über die logische Verknüpfung 15.5 aus den Werten 14.13, 14.16 und 14.23.

Wurde ein bestimmter Metallgegenstand erkannt, kann über Auswertung des Annäherungswertes 14.13 in einer weiteren Wertzuordnungsstufe 15.8 auch die Entfernung zum detektierten Gegenstand als Klartext 15.9 ausgegeben werden. Die beiden letztgenannten Klartextausgaben können dann ein Display ansteuern, auf dem der detektierte Gegenstand dann als Text oder Bild mit Tiefenangabe dargestellt ist.

Die beschriebene Erfindung eignet sich auch zur Materialanalyse oder Qualitätskontrolle z.B. in der Blechverarbeitung, da bereits kleinste Veränderungen der Materialzusammensetzung einwandfrei detektiert werden.

Des weiteren ist die Spulenanordnung nicht wie im Ausführungsbeispiel nur auf zwei Sendespulen mit Empfangsspule/n beschränkt, es können auch mehr als zwei Sendespulen auf mehr als zwei Empfangsspulen einwirken, um z.B. ein ganzes Spulenarray zu bilden.

Wenigstens zwei im Strom geregelte Sendespulen wirken damit auf eine oder mehrere Empfängerspulen so ein, dass ein "Null" Signal entsteht. "Null" bedeutet, dass nichts erfasst wird, nur Rauschen. Das betrifft den Zustand ohne Metall, mit Metall ist der Durchschnittswert der Demodulationsphasen gleich, also zueinander immer "Null". Ein Signal entsteht jedoch bei Phasenverschiebung von 90°, und dieser Durchschnittswert der Demodulationsphasen ist zueinander ungleich "Null". Wenn also von "kontinuierlicher Regelung zu "Null" gesprochen wird, dann sind die Durchschnittswerte der Demodulationsphasen zueinander "Null", auch bei Metalleinfluss.

In den bisherigen Ausführungsbeispielen wurden nur die Spulenströme der beiden Sendespulen 2.1 und 2.2 so zueinander geregelt, dass während der ersten Demodulationsphase 6.1 und der zweiten Demodulationsphase 6.2 der Durchschnittswert des Ausgangssignals des Differenzverstärkers 2.7 gleich groß wurde. Daher konnte sich in der dritten Demodulationsphase 6.3 und der vierten Demodulationsphase 6.4 ein taktsynchrones Signal ausbilden. Für die Auswertung der Metalldetektion wurde der Regelwert 7.2 und der Amplitudenwert in den Taktphasen 6.3 und 6.4 verwendet.

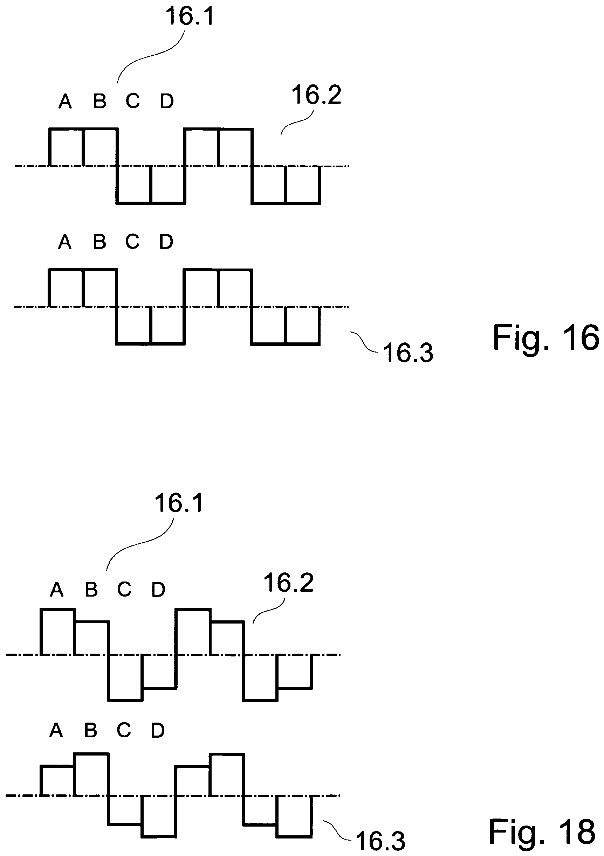

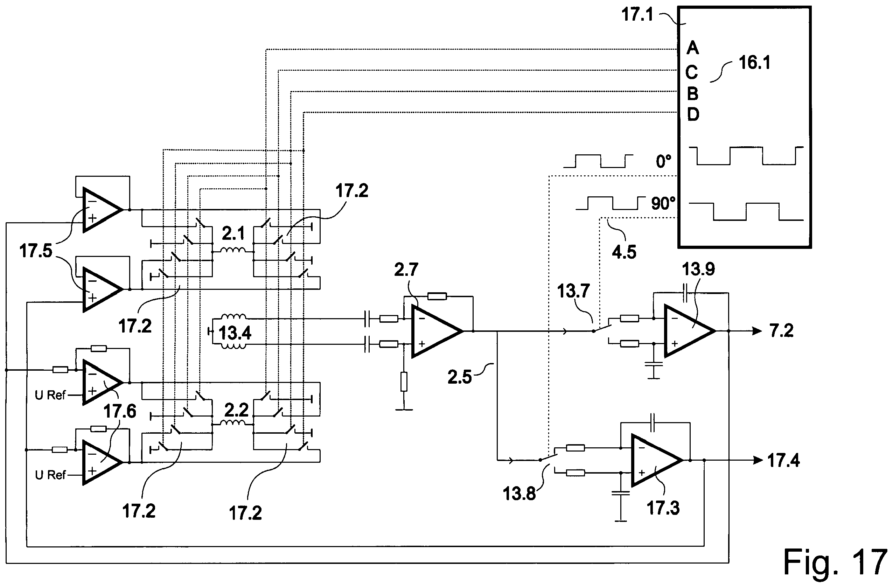

Ziel eines weiteren in den Fig. 16 bis 18 dargestellten Ausführungsbeispiels ist die vollständige Ausregelung des Ausgangssignals 2.5, was gleichzeitig zur Erhöhung der Dynamik des Systems beiträgt. Dazu werden die Sendestromphasen von bisher zweimal 180° in viermal 90° unterteilt. Die Demodulation des Ausgangssignals 2.5 des Vorverstärkers 2.7 erfolgt weiterhin mit dem Demodulationstakt 4.5 und den um 90° verschobenen Demodulationstakt 4.4 (Fig. 4). Der bisherige Speisestrom 2.3 bzw. 2.4 der Sendespulenanordnung mit jeweils 180° langen Abschnitten wird nun gemäß Fig. 4 in vier Abschnitte, bezeichnet mit A, B, C, D mit je 90° unterteilt. Fig. 16 zeigt die zeitliche Einteilung der Speisestromabschnitte 16.1. Der Taktabschnitt C entspricht dem Strom durch die Spule im Taktabschnitt A, wobei lediglich die Stromrichtung in der Spule invertiert ist. Gleiches gilt für die Taktabschnitte B und D. Mit dem Regelwert 7.2 wird wie bisher in Fig. 13 jetzt in Fig. 17 weiterhin der Strom in den Spulen 2.1 und 2.2 geregelt, jedoch nur in den Taktabschnitten A und C.

Die Demodulation der dritten Demodulationsphase 6.3 und der vierten Demodulationsphase 6.4 erfolgt mit dem zweiten Schalter für die Synchrondemodulation 13.8 zusammen mit dem hochverstärkender Vergleicher 17.3. Am Ausgang des Vergleichers 17.3 steht nun der zweite Regelwert 17.4 für die Regelung der Spulenspeiseströme in den Taktabschnitten B und D an. Über Stromtreiber 17.5 und entsprechend invertierende Stromtreiber 17.6 werden die Spulen 2.1 und 2.2 mit zueinander invertiert geregelten Strömen 16.2 und 16.3 über die Schalteranordnungen 17.2 angesteuert. Die Schalteranordnungen dienen zur entsprechenden Verteilung der Spulenströme in den Taktabschnitten 16.1

Durch die getrennte Regelung der Spulenströme in den vier Taktabschnitten A, B, C und D wird das Ausgangssignals 2.5 des Vorverstärkers 2.7 zu einem reinen "Null" Signal, das heißt, es sind überhaupt keine taktsynchronen Signalanteile im Ausgangssignal enthalten. Dies gilt für eine Messung ohne sowie auch mit Metalleinfluss. Das Ausgangssignal 2.5 des Vorverstärkers 2.7 besteht somit nur aus dem Verstärkerrauschen.

Ohne Metalleinfluss stellen sich vorzugsweise gleich große Spulenströme ein, dargestellt in Fig. 16. Mit Metalleinfluss verändern sich die Spulenströme wie z.B. in Fig. 18 dargestellt. Alle Information über das zu messende Metall sind nun in den beiden Regelwerten 7.2 und 17.4 enthalten Die weitere Signalverarbeitung bleibt gleich wie bereits im ersten Ausführungsbeispiel beschrieben.

In einem dritten Ausführungsbeispiel wird der Gesamtspulenstrom, also der geregelte Spulenstrom durch die erste und der invertiert geregelte Spulenstrom durch die zweite Spule, in den Taktabschnitten A und C im Verhältnis zu den Gesamtspulenstrom in den Taktabschnitten B und D geregelt. Es werden sinngemäß die gemittelten Signale aus den Taktabschnitten A und C mit den Signalen in den Taktabschnitten B und D verwendet, um die Regelwerte zu ermitteln. Auch in diesem Fall wird das Ausgangssignal 2.5 zu einen "Null"-Signal, wobei wieder die beiden Regelwerte 7.2 und 17.4 entstehen.

### Bezugszeichenliste

- 1.1: Mauerstück mit Moniereisen
- 1.2: Moniereisen
- 1.3: zu detektierendes Rohr
- 1.4: Metalldetektor
- 2.1: Sendespulenanordnung aus DE 10 2009 029 928 A1
- 2.2: Ausgangssignal der zweiten Sendespulenanordnung
- 2.3, 2.4: Speisestrom der Sendespulenanordnung
- 2.5: Ausgangssignal des Vorverstärker 2.7
- 2.6: Sensor, Spulenanordnung aus DE 10 2009 029 928 A1)
- 2.7: Vorverstärker aus DE 10 2009 029 928 A1
- 3.1: Metallstab mit quadratischem Querschnitt
- 3.2: Moniereisen
- 3.3: Metallrohr
- 3.4: Strom durch Sendespulenanordnung
- 3.5, 3.6, 3.7: Signalkurve
- 4.1: Abschnitt für Signalverläufe bei Metallstab
- 4,2: Abschnitt für Signalverläufe bei Moniereisen
- 4.3: Abschnitt für Signalverläufe bei Metallrohr
- 4.4: um 90° verschobener Demodulationstakt
- 4.5: Demodulationstakt
- 4.6: Signalverlauf aus Demodulation mit Phase 4.5
- 4.7: Signalverlauf aus Demodulation mit Phase 4.4
- 4.8: Messwertachse
- 4.9: Zeitachse
- 5.1: Differenzwertkurve aus 4.6 und 4.7
- 5.2: erster Schwellwert
- 5.3: zweiter Schwellwert
- 6.1: erste Demodulationsphase
- 6.2: zweite Demodulationsphase
- 6.3: dritte Demodulationsphase
- 6.4: vierte Demodulationsphase
- 6.5: Signalkurve für "Metallstab"
- 6.6: Signalkurve für "Moniereisen"
- 6.7: Signalkurve für "Metallrohr"
- 6.8: Nulldurchgänge
- 6.9: Ausgangssignal des Vorverstärkers ohne Metallanwesenheit
- 7.1: Kurve des mit Demodulationstakt 4.4 demodulierten Signal 2.5
- 7.2: Regelwert
- 7.3: Ruhewert ohne Metalleinfluss
- 9.1: Differenzwert der Kurven 7.1 und 7.2
- 10.1: Schwellwert
- 10.2: digitale Auswertung der Kurve 7.2
- 10.3: digitale Auswertung der Kurve 9.1
- 10.4: Ergebnis aus logischer Verknüpfung aus Kurve 10.2 u. 10.3
- 11.1: D, Distanz
- 12.1: Strecke der Multiplikationswerte
- 12.2: neutraler Multiplikationswert
- 13.1: Operationsverstärker
- 13.2: erste Sendespule
- 13.3: zweite Sendespule
- 13.4: Empfangsspulen
- 13.5: Umschalter
- 13.6: Taktgenerator
- 13.7: erster Schalter für Synchrondemodulation
- 13.8: zweiter Schalter für Synchrondemodulation
- 13.9: hochverstärkender Vergleicher
- 13.10: mäßig verstärkender Vergleicher
- 13.11: Invertierstufe
- 13.12: Regler
- 13.13: Differenzbildung
- 13.14: Schwellwertschalter
- 13.15: Auswertelogik
- 13.16: geregelter Ausgangswert des Vergleichers 13.10
- 13.17: Ausgangswert "alle Metallgegenstände"
- 13.18: Ausgangswert "alle Metallgegenstände mit Ausblendung unerwünschter Teile"
- 13.19: Ausgangswert "nur gesuchter Metallgegenstand"
- 13.22: Referenzspannung
- 13.23: Beispiel Kurvenverlauf bei Metallannäherung
- 14.1: erste digitale Mittelwertbildung
- 14.2: zweite digitale Mittelwertbildung
- 14.3: digitaler Komparator
- 14.4: up/down Zähler
- 14.5: D/A Wandler
- 14.6: getaktete Invertierstufe
- 14.8: Multiplikationsstufe
- 14.9: erster Wertespeicher
- 14.10: Differenzbildung
- 14.11: zweiter Wertespeicher
- 14.12: Differenzbildung
- 14.13: Annäherungswert für beliebigen Metallgegenstand
- 14.14: Taste für Abgleich ohne Metalleinfluss
- 14.15: Taste für Einlernvorgang für auszublendende Metallgegenstände
- 14.16: Materialbestimmungswert
- 14.19: A/D Wandler
- 14.20: manipulierter Ausgangswert
- 14.21: Vergleicherstufe
- 14.22: Differenzbildung
- 14.23: Ausgangswert mit Ausblendung
- 15.1: Wertzuordnung Metallgegenstand
- 15.2: Kennwert für Metallgegenstand
- 15.3: Temperatursensor
- 15.4: Multiplikationswertgenerator
- 15.5: logische Verknüpfung
- 15.6: Klartextausgabe Metallgegenstand
- 15.7: Klartextspeicher
- 15.8: Wertzuordnung Entfernung
- 15.9: Klartextausgabe Entfernung
- 15.10: Multiplikationswerte
- 16.1: Speisestromtaktabschnitte
- 16.2: Spulenstrom durch Sendespulenanordnung 2.1
- 16.3: Spulenstrom durch Sendespulenanordnung 2.2
- 17.1: Taktgenerator mit Ausgang für Speisestromtaktabschnitte
- 17.2: Schalteranordnung
- 17.3: hochverstärkender Vergleicher für zweiten Regelwert
- 17.4: zweiter Regelwert
- 17.5: Stromtreiberstufe
- 17.6: invertierende Stromtreiberstufe

## Patentansprüche

1. Verfahren zur Ortung metallischer oder Metall enthaltender Objekte und Materialien, bei dem Ströme in mindestens zwei Sendespulen so zueinander geregelt werden können, dass ein von wenigstens einer Empfangsspule empfangenes Empfangsspulenausgangssignal kontinuierlich, auch bei Metalleinfluss zu "Null" geregelt wird, wobei im zu "Null" ausgeregelten Zustand der Mittelwert des Empfangsspulenausgangssignals in einer ersten Demodulationsphase (6.1) gleich groß dem Mittelwert des Empfangsspulenausgangssignals einer weiteren um 90° versetzten Demodulationsphase (6.2) ist, wobei die Amplitude des für den zu "Null" ausgeregelten Zustand durch Demodulation in der ersten Demodulationsphase demodulierten Empfangsspulenausgangssignals und die Amplitude des für den zu "Null" ausgeregelten Zustand durch Demodulation der um 90° versetzten weiteren Demodulationsphase (6.2) demodulierten Empfangsspulenausgangssignals, vorzugsweise wenigstens bei 0° und bei einer um 90° versetzten Demodulation, als Werte erfasst werden,
**dadurch gekennzeichnet, dass** die Amplituden angeglichen werden, und dass das demodulierte Signal der ersten Demodulationsphase (6.1) und das demodulierte Signal der um 90° versetzten weiteren Demodulationsphase (6.2) mittels eines aus den Amplituden ermittelten Multiplikators in Deckung gebracht werden.

2. Verfahren nach Anspruch 1, **dadurch gekennzeichnet, dass** der Multiplikator automatisch per Software oder manuell per Potentiometer eingestellt wird.

3. Verfahren nach Anspruch 1 oder 2, **dadurch gekennzeichnet, dass** eine eventuell bestehende Differenz der demodulierten Signale der ersten Demodulationsphase (6.1) und der weiteren Demodulationsphase (6.2) zueinander ausgeregelt wird, wobei der so ermittelte Regelwert als Detektionswert zur Erfassung anderer Metallgegenstände verwendet wird.

4. Verfahren nach einem der vorhergehenden Ansprüche, **dadurch gekennzeichnet, dass** wenigstens eine Regelgröße und/oder der Multiplikator bei Metalleinfluss als Detektionswert zur Ortung oder Ausblendung eines Objekts verwendet wird.

5. Verfahren nach einem der Ansprüche 1 bis 3, **dadurch gekennzeichnet, dass** der Multiplikator und/oder ein Detektionswert, bei dem/denen auch bei Metallkontakt die demodulierten Signale in Deckung sind, gespeichert wird/werden.

6. Verfahren nach einem der Ansprüche 1 bis 5, **dadurch gekennzeichnet, dass** der Multiplikator als Kennung für einen bestimmten Gegenstand mit einem Wert aus einer Tabelle, der das detektierte Objekt in Klartext bezeichnet, verglichen wird und bedarfsweise ausgegeben wird.

7. Verfahren nach einem der vorhergehenden Ansprüche, **dadurch gekennzeichnet, dass** nur ein "eingelerntes" Objekt unter Ausblendung aller weiteren Gegenstände detektiert wird.

8. Verfahren nach einem der vorhergehenden Ansprüche, **dadurch gekennzeichnet, dass** die den Demodulationsphasen entsprechenden Sendestromphasen innerhalb eines Taktzyklus in wenigstens drei Abschnitte, vorzugsweise in vier Abschnitte A, B, C, D von viermal 90° unterteilt werden, die wechselweise oder paarweise in der Stromrichtung invertiert sind.

9. Verfahren nach Anspruch 8, **dadurch gekennzeichnet, dass** in den Abschnitten A,C und B, D paarweise zugeordnete, gesonderte Regelwerte ermittelt werden

10. Verfahren nach einem der Ansprüche 8 oder 9, **dadurch gekennzeichnet, dass** ein geregelter Spulenstrom durch die erste und ein invertiert geregelter Spulenstrom durch die zweite Spule in den Abschnitten A und C im Verhältnis zu den Abschnitten B und D geregelt wird.

11. Verfahren nach einem der vorhergehenden Ansprüche, **dadurch gekennzeichnet, dass** der Multiplikator aus der oder den Regelgrößen ermittelt wird, die zur Ausregelung der Amplitude des Empfangsspulenausgangssignals zu "Null" dient oder dienen.

## Claims

1. Method for locating metallic or metal-containing objects and materials, in which currents in at least two transmitting coils can be regulated relative to one another in such a way that a receiving coil output signal received by at least one receiving coil is continuously regulated to "zero", even in the case of metal influence, the mean value of the receiving coil output signal in a first demodulation phase (6.1) being equal to the mean value of the receiving coil output signal of a further demodulation phase (6.2) offset by 90° in the state regulated to "zero",
wherein the amplitude of the receiving coil output signal demodulated for the state compensated to "zero" by demodulation in the first demodulation phase and the amplitude of the receiving coil output signal demodulated for the state compensated to "zero" by demodulation in the further demodulation phase (6.2) offset by 90°, preferably at least at 0° and at a demodulation offset by 90°, are detected as values, **characterised in that** the amplitudes are matched, and **in that** the demodulated signal of the first demodulation phase (6.1) and the demodulated signal of the further demodulation phase (6.2) offset by 90° are brought into coincidence by means of a multiplier determined from the amplitudes.

2. Method according to claim 1, **characterised in that** the multiplier is set automatically by software or manually by potentiometer.

3. Method according to claim 1 or 2, **characterised in that** a possibly existing difference of the demodulated signals of the first demodulation phase (6.1) and the further demodulation phase (6.2) other is compensated with respect to each, wherein the control value determined in this way is used as a detection value for a detection of other metal objects.

4. Method according to one of the preceding claims, **characterised in that** at least one control variable and/or the multiplier is used as a detection value for locating or blanking an object in the case of metal influence.

5. Method according to any one of claims 1 to 3, **characterised in that** the multiplier and/or a detection value is/are stored, at which the demodulated signals are in coincidence even in the case of metal contact.

6. Method according to one of claims 1 to 5, **characterised in that** the multiplier is compared as an identifier for a specific object with a value from a table, which designates the detected object in plain text, and is output as required.

7. Method according to one of the preceding claims, **characterised in that** only one "taught-in" object is detected, with all other objects being blanked out.

8. Method according to one of the preceding claims, **characterised in that** the transmit current phases corresponding to the demodulation phases are divided within a clock cycle into at least three sections, preferably into four sections A, B, C, D of four times 90°, which are inverted alternately or in pairs in the current direction.

9. Method according to claim 8, **characterized in that** separate control values assigned in pairs are determined in the sections A,C and B,D.

10. A method according to any one of claims 8 or 9, **characterised in that** a regulated coil current through the first coil and an inverted regulated coil current through the second coil are regulated in sections A and C relative to sections B and D.

11. Method according to one of the preceding claims, **characterised in that** the multiplier is determined from the control variable or variables, which serves or serve to adjust the amplitude of the receiving coil output signal to "zero".

## Revendications

1. Procédé de détection d'objets métalliques ou d'objets et matériaux contenant du métal, dans lequel des courants dans au moins deux bobines d'émission peuvent être réglés l'un par rapport à l'autre de telle manière qu'un signal de sortie de bobine de réception reçu par au moins une bobine de réception soit réglé de façon continue, également sans influence métallique à « zéro », dans lequel à l'état réglé à « zéro », la valeur moyenne du signal de sortie de bobine de réception soit égal dans une première phase de démodulation (6.1) à la valeur moyenne du signal de sortie de bobine de réception d'une autre phase de démodulation (6.2) décalée de 90°, dans lequel l'amplitude du signal de sortie de bobine de réception démodulé par démodulation pour l'état réglé à « zéro » dans la première phase de démodulation et l'amplitude du signal de sortie de bobine réception démodulé par démodulation pour l'état réglé à « zéro » dans l'autre phase de démodulation (6.2) décalée de 90° sont mesurées en tant que valeurs avec une démodulation décalée au moins de 0° et de 90°,
**caractérisé en ce que** les amplitudes sont égalisées et **en ce que** le signal démodulé de la première phase de démodulation (6.1) et le signal démodulé de l'autre phase de démodulation (6.2) décalée de 90° sont superposés au moyen d'un multiplicateur effectuant un calcul à partir des amplitudes.

2. Procédé selon la revendication 1, **caractérisé en ce que** le multiplicateur est réglé automatiquement à l'aide d'un logiciel ou manuellement à l'aide d'un potentiomètre.

3. Procédé selon la revendication 1 ou 2, **caractérisé en ce qu'**une différence éventuelle existant entre les signaux démodulés de la première phase de démodulation (6.1) et de l'autre phase de démodulation (6.2) est réglée entre eux, la valeur de réglage ainsi déterminée étant utilisée comme valeur de détection pour la détection d'autres objets métalliques.

4. Procédé selon l'une des revendications précédentes, **caractérisé en ce qu'**au moins une grandeur de réglage et/ou le multiplicateur est/sont utilisé(e)(s) lors d'une influence métallique comme valeur de détection pour la localisation ou le masquage d'un objet.

5. Procédé selon l'une des revendications 1 à 3, **caractérisé en ce que** le multiplicateur et/ou une valeur de détection pour lequel/laquelle/lesquelles les signaux modulés sont superposés également lors d'un contact métallique, est/sont enregistré(e)(s).

6. Procédé selon l'une des revendications 1 à 5, **caractérisé en ce que** le multiplicateur est comparé et si besoin, distribué, en tant qu'indicateur d'un objet déterminé avec une valeur provenant d'un tableau qui qualifie en texte clair l'objet détecté.

7. Procédé selon l'une des revendications précédentes, **caractérisé en ce que** seul un objet « appris » est détecté par masquage de tous les autres objets.

8. Procédé selon l'une des revendications précédentes, **caractérisé en ce que** les phases de courant d'émission correspondant aux phases de démodulation sont subdivisées à l'intérieur d'un cycle de cadence en au moins 3 sections, de préférence en quatre sections A, B, C, D de quatre fois 90°, lesquelles sont inversées alternativement ou par paires dans la direction du courant.

9. Procédé selon la revendication 8, **caractérisé en ce que**, dans les sections A, C et B, D, des valeurs de réglage distinctes associées par paires sont déterminées.

10. Procédé selon l'une des revendications 8 et 9, **caractérisé en ce qu'**un courant de bobine réglé est réglé par la première bobine et un courant de bobine réglé inversé est réglé par la deuxième bobine dans les sections A et C par rapport aux sections B et D.

11. Procédé selon l'une des revendications précédentes, **caractérisé en ce que** le multiplicateur est déterminé à partir de la ou des grandeur(s) de réglage qui sert ou servent au réglage à « zéro » de l'amplitude du signal de sortie de bobine de réception.
